(19) Europäisches Patentamt
European Patent Office
Office européen des brevets

(11) **EP 2 029 847 B2**

(12) **NEW EUROPEAN PATENT SPECIFICATION**
After opposition procedure

(45) Date of publication and mention
of the opposition decision:
**11.09.2019 Bulletin 2019/37**

(45) Mention of the grant of the patent:
**23.12.2015 Bulletin 2015/52**

(21) Application number: **07748572.0**

(22) Date of filing: **12.06.2007**

(51) Int Cl.:
*E06B 1/60* *(2006.01)*    *F16B 5/02* *(2006.01)*

(86) International application number:
**PCT/SE2007/050412**

(87) International publication number:
**WO 2007/145584 (21.12.2007 Gazette 2007/51)**

(54) **Fastener for fixing a door or window frame to the border of an opening in a building**

Befestigungselement zum Anbringen eines Tür- oder Fensterrahmens an einer Gebäudeöffnung

Élément de fixation pour fixer le cadre d'une porte ou fenêtre dans une ouverture de bâtiment

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **12.06.2006 SE 0601311**

(43) Date of publication of application:
**04.03.2009 Bulletin 2009/10**

(73) Proprietor: **Jeld-Wen Sverige AB**
**265 81 Åstorp (SE)**

(72) Inventor: **BRESMAN, Jonas**
**260 60 Kvidinge (SE)**

(74) Representative: **Hanna Moore + Curley**
**Garryard House**
**25/26 Earlsfort Terrace**
**Dublin 2, D02 PX51 (IE)**

(56) References cited:
**WO-A1-90/04695**    **DE-A1- 19 825 958**
**GB-A- 2 123 513**    **NL-A- 6 802 514**
**SE-B- 431 668**    **SE-C- 188 650**

- **KATRO PRODUCT CATALOGUE BYGG FROM 2000**
- **KATRO PRODUCT CATALOGUE BYGG FROM 2004**
- **ADJUFIX FOLDER FROM NOVEMBER 2005**
- **DRAWINGS ADJUFIX WM38**
- **DRAWINGS TRT864**

EP 2 029 847 B2

**Description**

TECHNICAL FIELD

The invention relates to a frame fixing comprising a cylindrical unit with a threaded outer casing designed with a bore that passes through in an axial direction and comprises a first section designed with a cross section in a radial direction that is suitable for the insertion of a tool that is intended to rotate the cylindrical unit. The frame fixing comprises a fixing device that can be inserted into the bore.

BACKGROUND ART

Doors and windows comprise a frame that surrounds a main part. The main part can consist of a pivoting unit such as a door or a window, both of which are attached to one side of the frame in such a way that they can pivot. In addition, in the case of a window, the main part can consist of a fixed glazed unit.

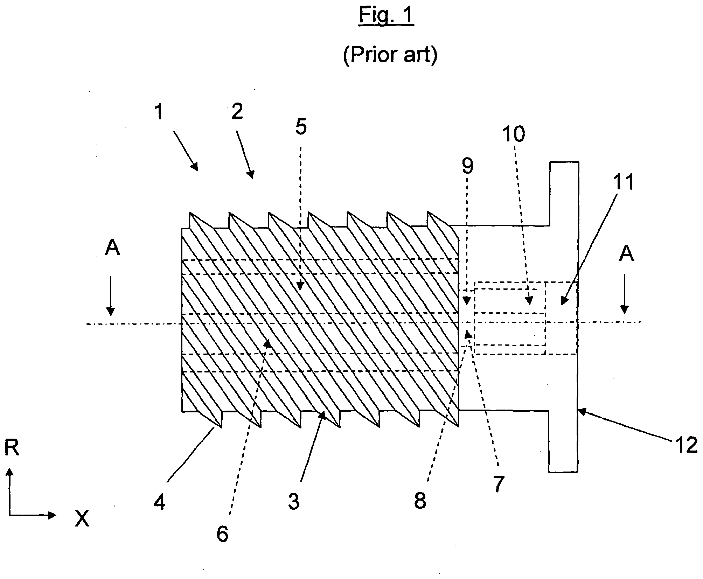

For the installation of doors and windows in a building, the use of frame fixings for attaching the frame to the building is already known. The frame fixing comprises a casing in the form of a cylindrical unit with a threaded outer casing, and a fixing device in the form of a bolt. The attached Figures 1-4 show a previously-known frame fixing and the description below can be read with reference to these figures.

The cylindrical unit is designed with a bore that passes through in an axial direction. A first section of the bore is designed with a cross section in a radial direction that is suitable for the insertion of a tool, and can consist, for example, of a triangular, four-sided, five-sided, hexagonal or other suitable shape that provides a good engagement between the tool and the bore. In addition, in the bore there is a flange comprising a specially-designed matching-fit section. The matching-fit section is intended to receive a tool with a corresponding shape as the matching-fit section, for example a triangular, four-sided, five-sided, hexagonal or other suitable shape that provides a good engagement between the tool and the matching-fit section. The bolt comprised in the frame fixing is designed to be fastened into the building in such a way that it creates a fixing between the frame and the building. The bolt fits into the bore in such a way that the head of the bolt and a part of the fixing device that extends from the head are hidden in the bore, while the remaining part of the bolt protrudes out from the cylindrical unit 3 and is intended to be fixed into the fabric of the building. During installation of the frame, the head of the bolt is intended to make contact with the flange by means of the pressure when the bolt is screwed into the building as described below.

During the installation of doors and windows, the following elements are carried out:

- A hole is pre-drilled in the frame, into which the cylindrical unit is screwed via the external threads and by means of the tool that is arranged in the matching-fit section. The cylindrical unit is screwed into the hole in such a way that essentially the whole cylindrical unit is hidden in the hole.

- The frame is placed in an opening that is arranged in the fabric of a building, whereupon the bolt is inserted into the bore from the inside of the frame, that is from the side of the frame towards which the door/window will face.

- Thereafter, the fixing device is screwed into the fabric of the building.

According to a known model of the frame fixing, the installation of the frame fixing has been completed when the bolt has been screwed into the fabric of the building, but according to another model, one step remains, namely:

- the cylindrical unit is partially screwed out from the frame by means of a tool that is inserted into the bore from the inside of the frame, until the cylindrical unit is in contact with the fabric of the building and exerts a pressure on the fabric of the building from the frame. By adjusting the pressure, the position of the frame can be adjusted in relation to the fabric of the building. If the cylindrical unit has essentially changed position, the fixing device may need to be screwed in further in order for a tension fixing to be achieved between the frame fixing (and hence the frame) and the fabric of the building.

Both the models described above have been available on the market for over 50 years and for all this time have been associated with a well-known problem. The problem is that the frame can move in relation to the fabric of the building after installation. In the case of an opening door or an opening window, the tolerances are small between the frame and the pivoting unit, so that only a small displacement of the frame is sufficient to give certain parts of the pivoting unit a negative clearance in relation to the frame. When such a situation arises, the frame must be adjusted in order for a positive clearance to be obtained once again. It has been known for a long time that such adjustments are necessary over a period of time "until the door has settled".

There is a particularly difficult problem when the frame fixing is to be used in association with concrete, steel and brick, and other materials that require a plug into which the fixing device is to be screwed. In order to be able to insert the plug, a hole must be drilled via the cylindrical unit. As the plug has an external diameter that exceeds the diameter of the fixing device, a drill bit with a diameter that exceeds the diameter of the fixing device must be used. The drill bit is inserted through the cylindrical unit and the hole is drilled in the fabric of the building. The plug is inserted into the drilled hole after having been passed though the cylindrical unit. As the bore must have a diameter that suits the drill bit and the plug, and as the fixing device must have a smaller diameter that is suitable for being screwed into a smaller internal diameter in the plug, there is a great difference in diameter between the bore and the fixing device, which enables the abovementioned pivoting of the frame to occur.

GB 2 123 513 A discloses a frame sleeve for attaching window and door frames in openings.

The problem described above has thus been known for a long time, and hence it has been recognised for a long time that there is a need for an improved device and an improved method for the installation of doors and windows, in particular when the door/window comprises a pivoting unit.

DISCLOSURE OF INVENTION

The present invention is intended to solve the problem described above, by means of a frame fixing comprising a cylindrical unit with a threaded outer casing according to the present claim 1.

The cylindrical unit is designed with a bore that passes through in an axial direction. The bore comprises a first section designed with a cross section in a radial direction that is suitable for the insertion of a tool that is intended to rotate the cylindrical unit. The cross section of the bore can consist, for example, of a triangular, four-sided, five-sided, hexagonal or other suitable shape that provides a good engagement between the tool and the bore. In addition, the bore comprises a flange comprising an inner section.

The frame fixing comprises a fixing device that can be inserted into the bore. By "can be inserted" is meant that the fixing device can move freely in the bore in an axial direction and that the cylindrical unit can be rotated around the fixing device when the fixing device is fixed in an external unit, for example the fabric of a building.

The invention is characterized in that the frame fixing comprises an adapter arranged at least partially in the bore. The adapter comprises an outer part arranged to fit in the bore and an inner part arranged to comprise at least a part of a controlling section. The inner part of the adapter thus comprises a bore, that is a hole that passes right through.

The controlling section has a cross section $D1$ in a radial direction that is determined by the length $L1$ of the controlling section in an axial direction in such a way that the controlling section limits the radial freedom of movement of the central axis of the fixing device in relation to the central axis of the controlling section to a movement of a predetermined maximal size at the end surface of the cylindrical unit.

An advantage of the invention is that the frame fixing makes possible a more robust fixing between the frame and the fabric of the building, with the abovementioned problems of the frame pivoting having been eliminated or at least having been reduced significantly.

The movement of the fixing device consists of two possible directions of movement. The first direction of movement consists of a translatory movement in a radial direction (below called the radial freedom of movement) in which the whole fixing device has a parallel movement. The second direction of movement consists of the fixing device being able to pivot within the controlling section (below called the pivoting freedom of movement)

The radial freedom of movement, Rradial, of the fixing device is limited to a movement of a maximum of 0.5 mm from the central axis of the fixing device to the central axis of the controlling section at the end surface of the cylindrical unit. This value is taken for a newly-fitted door in a frame with a gap between the door and the frame of approximately 2.5 mm. This value is thus not an absolute amount for the invention, but is rather intended to provide an expert in the field with an indication of the possibilities of the invention. A smaller or a larger value is thus possible and can be ensured by changing the diameter and length of the controlling section as described below.

The values given above are taken as examples of empirically determined values that give rise to a permitted pivoting of the door frame without the pivoting giving rise to so large a deviation that the door can not be opened and closed in an unobstructed way. The frame fixing according to the invention enables the pivoting of the frame to be minimized by increasing the length of the controlling section in an axial direction.

The pivoting freedom of movement of the fixing device is limited to an approximate maximal angle $\alpha = \arctan(1/20) \approx 2.9°$ of the central axis of the fixing device in relation to the central axis of the controlling section when Rradial is 0.5 mm and the controlling section is 2 cm long and extends all the way to the frame. Formulae for this calculation are to be found below.

There is a relationship between the radial freedom of movement, the length of the controlling section and the pivoting freedom of movement that will be described in greater detail below.

In order for the cylindrical unit to be able to be rotated around the fixing device, it is necessary for there to be a positive clearance between the fixing device and the controlling section, or at least a zero clearance.

The fixing device can consist of a bolt or a spike or the like. The bolt advantageously comprises a body in the form of a cylindrical part with a smooth outer surface that is designed to fit into the controlling section in such a way that the abovementioned limitation of the movement of the fixing device is achieved. A spike can also comprise a body in the form of such a cylindrical part, but the body can also have a number of grooves or the like, with the outer parts of the grooves, viewed in a radial direction, constituting contact surfaces within and against the controlling section.

According to a first embodiment of the invention, the bore comprises a flange creating part of the controlling section and a specially-designed matching-fit section. The controlling section is here located between the first section and the matching-fit section. The matching-fit section is located between the controlling section and an end surface of the cylindrical unit. The end surface has an extent in a plane in a radial direction. The matching-fit section is intended to receive a tool with a corresponding shape as the matching-fit section, for example triangular, four-sided, five-sided, hexagonal or other suitable shape in order to obtain a good engagement between the tool and the matching-fit section. The adapter can be arranged in the bore in such a way that the inner section of the flange and the inner part of the adapter together create the controlling section. The adapter can also be arranged in the bore in such a way that the shape of the outer part of the adapter is determined by the inner section of the flange and the matching-fit section in such a way that only the inner part of the adapter creates the controlling section.

According to a second embodiment of the invention, the bore comprises only the first section and the flange. The adapter is here arranged in the inner section of the flange. As in the embodiments described above, the controlling section is located between the first section and the end surface of the cylindrical unit. The end surface advantageously comprises a peripheral part in the form of a flange designed to receive a tool with a corresponding shape as the peripheral part, for example triangular, four-sided, five-sided, hexagonal or other suitable shape in order to obtain a good engagement between the tool and the peripheral part upon rotation of the cylindrical unit. The end surface does not need to have such a peripheral part designed to receive a tool, but can comprise one or more recesses or the like designed for a tool with corresponding projecting parts intended to be used to rotate the cylindrical unit.

As mentioned above, the frame fixing is intended to be used when fitting a door or a window arrangement in a building. The arrangement comprises a frame that is intended to be fixed in the fabric of the building, after which the actual door or window is fitted in the frame. The cylindrical unit of the frame fixing is screwed into the frame from the outside of the frame, that is from the side of the frame that faces towards the fabric of the building, using a tool mounted in the matching-fit section or in the peripheral part or in some other suitable arrangement that fits the tool. Following this, the frame is positioned in an opening arranged in the fabric of the building, after which the fixing device is inserted into the bore from the inside of the frame, that is from the side of the frame that faces away from the fabric of the building. The fixing device is then secured in the building, whereby a fixing is created between the frame and the building. In addition, the cylindrical unit is screwed out from the frame in the direction towards the fabric of the building by means of a tool that is fitted in the first section. The cylindrical unit is screwed out from the frame until an end surface of the cylindrical unit is in contact with the fabric of the building, whereby the fixing between the frame and the fabric of the building is made stronger and, in addition, the distance between the frame and the fabric of the building is fixed. The fixing device is thereafter inserted yet further in the direction towards the fabric of the building until the head of the fixing device is in contact with the flange in the bore in such a way that the fixing device exerts a pulling force towards the flange in the direction towards the fabric of the building.

When the frame fixing has been screwed in place in the frame, the matching-fit section according to the first embodiment above is no longer necessary for the function of the frame fixing. In this embodiment, there are three alternatives for the invention. The first alternative is that the controlling section is of such a length and has such tolerances in relation to the body of the fixing device that the radial freedom of movement of the fixing device is limited according to the above. The second alternative is that the frame fixing comprises an adapter comprising an outer part with a shape that corresponds to the matching-fit section and an inner part with corresponding dimensions to the controlling section in the flange. The inner part of the adapter thus comprises a part of the controlling section of the frame fixing and thereby increases the length of the controlling section in an axial direction. An advantage of such an arrangement is that the tolerances of the controlling section in relation to the body of the fixing device can be increased, that is the clearance between the fixing device and the controlling section can be greater with increased length while maintaining the radial freedom of movement. The third alternative is that the adapter is designed to fit into both the matching-fit section and the controlling section. The inner part of the adapter thus comprises the whole controlling section of the frame fixing and can be adjusted. Increased tolerances enable a less expensive method to be used for manufacturing the frame fixing and, in addition, previously-known frame fixings can be converted to create a better and more robust frame fixing.

The adapter can be manufactured in plastic and/or metal and/or any other material that can be formed simply and inexpensively according to the above.

The reason that the tolerances can be increased is that the pivoting freedom of movement is reduced as the length of the controlling section is increased, according to the following formulae:

L1 = the length of the controlling section in an axial direction

L2 = the distance between the controlling section and the end surface of the cylindrical unit (including the controlling section).

D1 = the diameter of the controlling section

L3 = the length of the body in an axial direction along the central axis of the fixing device

L4 = the distance between the head of the fixing device and the end surface of the cylindrical unit (excluding the head) along the central axis of the fixing device when the head of the fixing device is in contact with the flange.

D2 = the diameter of the body

$\alpha$ = the angle between the central axis of the fixing device and the central axis of the controlling arrangement

Rradial = the maximal radial movement of the central axis of the fixing device for given L1-L4, D1 and D2 in relation to the central axis of the cylindrical arrangement.

Rpivot = the maximal pivoting movement of the central axis of the fixing device for given L1-L4, D1 and D2 in relation to the central axis of the cylindrical arrangement.

$$Rradial = (D1-D2)/2$$

$$\alpha = \text{arctangens } ((D1-D2)/L1)$$

$$Rpivot = L4 \text{x} \text{tangens } (\alpha) \text{x} 1/2$$

$$Rpivot = L4 \text{x} (D1-D2)/L1 \text{x} 1/2$$

It should be noted that for a pivoted fixing device, Rpivot according to the above is an approximation. L4 is measured when the central axis of the fixing device lies parallel to the central axis of the controlling arrangement. The point on the central axis of the fixing device that constitutes the measurement point for Rradial and Rpivot is taken in the plane that coincides with the end surface of the cylindrical unit. In the event of pivoting, the same measurement point will be located slightly inside the said plane and the distance from the measurement point to the plane constitutes the approximation. The approximation is valid for small values of $\alpha$.

L3 should always be equal to L1, or greater than L1, as, for example, a bolt with a smaller L3 would mean that the threaded section of the bolt, that could have a different diameter to the body, would be inside the controlling arrangement and could change the conditions governing the freedom of movement of the fixing device. For the same reason, L3 is always equal to or greater than L4.

L2 is always equal to or greater than L1, and the larger L2 is in relation to L1, the smaller is the length of the controlling section. The controlling section has a maximal length L1=L2 determined by the definition of L2.

According to the formulae above, it can be seen that when L1 is increased, Rpivot and $\alpha$ are reduced, but that Rpivot increases as L4 is increased. In the first instance of the first embodiment, L1 and L3 must thus be determined by L4 in order that the maximal permitted value of Rpivot is not exceeded.

In the second and third instances of the first embodiment, and in the second embodiment, it is the case that L4 = L1 = L2 and L3 can be varied, but when L3 = L4, it is the case that Rpivot = Rradial. This does not affect the angle $\alpha$, but an increase in L1 reduces the angle $\alpha$ and reduces the possibility of incorrect positioning of the frame.

In the second and third alternatives of the first embodiment respectively, the inner part of the adapter and the controlling section, or only the inner part of the adapter, create a controlling section where L4 = L1 which, according to the above, means that Rpivot = Rradial with the advantages that have been discussed above.

According to a third embodiment of the invention, the flange comprises a specially-modified section, for example in the form of a cone, and the head of the fixing device comprises a corresponding part. The fixing device thus fits into the controlling section of the bore in such a way that the specially-modified part of the head fits into the modified section of the flange and the body of the fixing device fits into the controlling section. An advantage of the embodiment is that the specially-designed section of the flange forms a part of the controlling section and controls the specially-designed part of the fixing device in such a way that the movement of the fixing device in relation to the cylindrical unit is minimized. This is due to the fact that, during installation of the frame, the head of the fixing device is in contact with the flange by means of the pressure when the fixing device is screwed into the building, as described below.

According to a fourth embodiment of the invention, the bore comprises a flange creating the controlling section and a specially-designed matching-fit section. The matching-fit section is here located between the first section and the controlling section. The controlling section is located between the matching-fit section and an end surface of the cylindrical unit. The end surface has an extent in a plane in a radial direction. The matching-fit section is intended to receive the adapter that is arranged with a shape that corresponds to that of the matching-fit section, for example with a cross section that is round, triangular, four-sided, five-sided, hexagonal, or other geometric shape. The outer part of the adapter can have a different shape to the matching-fit section, provided that the outer part still fits in the matching-fit section in such a way that the adapter is not a loose fit in the matching-fit section. The adapter thus advantageously comprises an outer part with a shape that corresponds to that of the matching-fit section and an inner part with corresponding dimensions to those of the controlling section in the flange. Together with the controlling section, the inner part of the adapter creates a bore and thus forms a part of the controlling section for the frame fixing and thereby increases the length of the controlling section in the axial direction.

An advantage of such an arrangement is that the tolerances of the controlling section in relation to the body of the fixing device can be increased, that is the clearance between the fixing device and the controlling section can be greater with increased length while maintaining the radial freedom of movement.

According to another embodiment of the invention, the adapter is designed to fit into both the matching-fit section and the controlling section. The inner part of the adapter thus comprises the whole controlling section of the frame fixing and can be adjusted to the required tolerances. An increased tolerance can enable a less expensive method to be used for manufacturing the frame fixing and, in addition, previously-known frame fixings can be converted to create a better and more robust frame fixing.

An advantage of the invention is that the adapter provides the advantage that the bore in the cylindrical unit can be larger than is appropriate for the fixing device. An advantage of the bore being able to be larger is that a drill bit with a diameter that is larger than the diameter of the fixing device can be used to drill holes in the fabric of a building or in a beam or the like via the cylindrical unit. This is necessary when the frame fixing is to be used in association with steel, concrete and brick and other materials that require a plug in which the fixing device is to be secured. The plug is placed in a pre-drilled hole in the fabric of the building, which hole was drilled after the drill bit has been inserted into and through the bore in the cylindrical unit. The plug is inserted into the pre-drilled hole after it has been passed through the bore in the cylindrical unit. The adapter is thereafter arranged in the bore in such a way that it fills the oversized bore and the fixing device is a perfect fit in the inner part of the adapter. It is important that the adapter has a length L1 that is determined by the diameter D1 of the inner part in such a way that together they provide the control of the fixing device that was described above.

In all the above embodiments of the invention, the controlling section is arranged coaxially in relation to the bore. An advantage of this embodiment is that the cylindrical unit has the same centre of rotation as the fixing device, which means that the frame does not move during rotation of the cylindrical unit, when the cylindrical unit is screwed in the direction towards the fabric of the building.

The adapter can be manufactured in plastic and/or metal and/or any other material that can be formed simply and inexpensively according to the any of the described embodiments. A flexible material has the advantage that the frame fixing can absorb vibrations through the adapter. However, the adapter must not be so soft that the frame fixing is allowed to pivot. The adapter is advantageously arranged so that it forms a push fit with the bore, that is there is a negative clearance. An advantage of this is that the adapter is less likely to change position in the bore as a result of the action of forces from the fixing device. The outside of the adapter is advantageously a shape that corresponds to the shape of the bore. If the first section has an angular cross section, the adapter also has an angular cross section in a corresponding way. An advantage of this is that the adapter is a good fit in the bore and cannot rotate.

According to an embodiment of the invention, the fixing device comprises the adapter so that the adapter is automatically arranged in the bore when the fixing device is inserted into the bore. An advantage of this is that the fixing device and the adapter can be manufactured separately and then assembled so that they can then be sold as a unit. Offering a unit to a consumer is advantageous to the consumer who has then only one item to deal with instead of two. In addition, the installation of the frame fixing is simplified, as the adapter is automatically positioned correctly in the bore when the fixing device is put in place.

According to another embodiment of the invention, the fixing device and the adapter are designed in one piece. According to this embodiment, the inner section of the flange creates the controlling section. As with the embodiment above, an advantage of this embodiment is that the consumer only has to deal with one unit. In this case, the adapter must be arranged to be able to rotate in the bore so that the fixing device can be secured in the fabric of the building.

The adapter can be designed with a conical outer part, which has the advantage that the adapter is compressed when the head of the fixing device presses the adapter into the first section of the bore. In addition, the bore in the first section can be conical in a corresponding way, in order to apply an even pressure on the outer part of the adapter. The bore in the first section is advantageously designed with the larger part of the cone facing towards the part of the frame fixing into which the adapter is to be inserted.

The adapter can be designed with a slot that passes through from the outer part to the inner part. Such a slotted adapter has the advantage that the adapter can be screwed onto a fixing device comprising a threaded outer part with threads that have a larger diameter than the body of the fixing device, as a result of the slot expanding and widening the inner part of the adapter in such a way that the threads can fit into the inner part. The body is located between the head and the outer threaded part. In addition, instead of being provided with a slot, the adapter can be divided in two, for the same reason.

In addition, the fixing device can be threaded the whole way from the head to its outer tip. The threaded part then comprises the body of the fixing device. If the adapter is so soft that the threads create imprints in the adapter, the outer part of the adapter must have a dimension that allows the adapter to rotate in the bore, so that the position of the frame fixing in the frame can be adjusted.

BRIEF DESCRIPTION OF DRAWINGS

The invention will be described below in association with a number of drawings, in which:

Figure 1 shows schematically a casing of a frame fixing according to previously-known technology;

Figure 2 shows schematically a cross section along the line A-A in Figure 1 of a casing of a frame fixing according to previously-known technology;

Figure 3 shows schematically a frame fixing comprising a fixing device and a casing according to Figure 2;

Figure 4 shows schematically a frame fixing according to Figure 3 after installation;

Figure 5 shows schematically a casing of a frame fixing according to a first embodiment of the invention;

Figure 6 shows schematically a frame fixing comprising a fixing device and a casing according to Figure 5;

Figure 7 shows schematically a frame fixing according to Figure 6 after installation;

Figure 8 shows schematically a frame fixing comprising a fixing device, a casing and an adapter according to a second embodiment of the invention;

Figure 9 shows schematically a frame fixing comprising a fixing device, a casing and an adapter according to a third embodiment of the invention;

Figure 10 shows schematically a frame fixing comprising a fixing device, a casing and an adapter according to a fourth embodiment of the invention;

Figure 11 shows schematically a frame fixing as shown in Figure 10 but with an alternative design for the adapter;

Figure 12 shows schematically a frame fixing comprising a fixing device, a casing and an adapter according to a fifth embodiment of the invention;

Figure 13 shows schematically a frame fixing comprising a fixing device, a casing and an adapter according to a sixth embodiment of the invention;

Figure 14 shows schematically a frame fixing comprising a fixing device, a casing and an adapter according to a seventh embodiment of the invention;

Figure 15 shows schematically a frame fixing comprising a fixing device, a casing and an adapter according to an eighth embodiment of the invention;

Figure 16 shows schematically a frame fixing comprising a fixing device, a casing and an adapter according to a ninth embodiment of the invention;

Figure 17 shows schematically a frame fixing comprising a fixing device, a casing and an adapter according to a tenth embodiment of the invention, and

Figure 18 shows schematically a frame fixing comprising a fixing device, a casing and an adapter according to an eleventh embodiment of the invention.

MODES FOR CARRYING OUT THE INVENTION

Figure 1 shows schematically a casing 2 of a frame fixing 1 according to previously-known technology. The casing is in the form of a cylindrical unit 3 with a threaded outer casing 4. The cylindrical unit 3 is designed with a bore 5 that passes through in an axial direction X. A first section 6 of the bore 5 is designed with a cross section in a radial direction R that is suitable for the insertion of a tool, and can consist, for example, of a triangular, four-sided, five-sided, hexagonal or other suitable shape that provides a good engagement between the tool and the first section 6. In a second section 7 in the bore 5, there is a flange 8 comprising a circular inner section that creates a controlling section 9 and a specially-designed matching-fit section 10. The matching-fit section 10 is designed to receive a tool with a corresponding shape as the matching-fit section 10, for example triangular, four-sided, five-sided, hexagonal or other suitable shape that provides a good engagement between the tool and the matching-fit section 10.

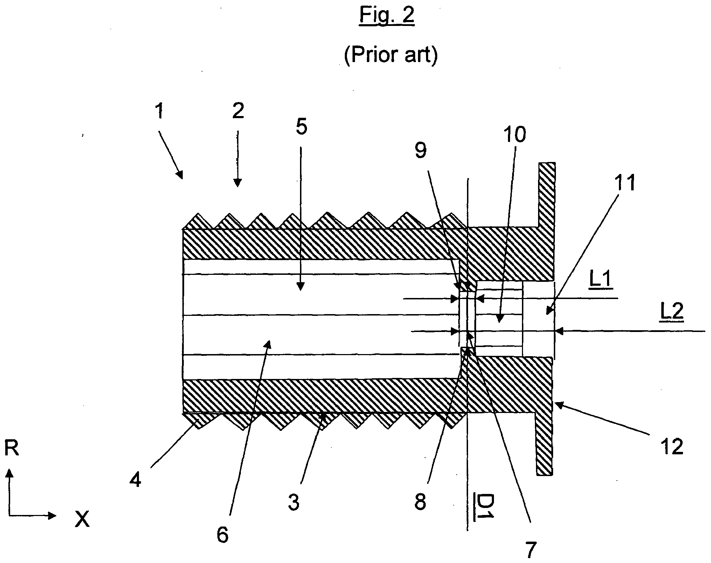

Figure 2 shows schematically a cross section along the line A-A in Figure 1 of a casing of a frame fixing according to previously-known technology. Figure 2 shows that, after the matching-fit section 10, the bore 5 comprises a third section 11 with an essentially circular cross section. Figure 2 shows that L1 = the length of the controlling section 9 in an axial direction and L2 = the distance between the controlling section 9 and the end surface 12 of the cylindrical unit 3. L2 comprises the length L1 of the controlling section. D1 = the diameter of the controlling section 9.

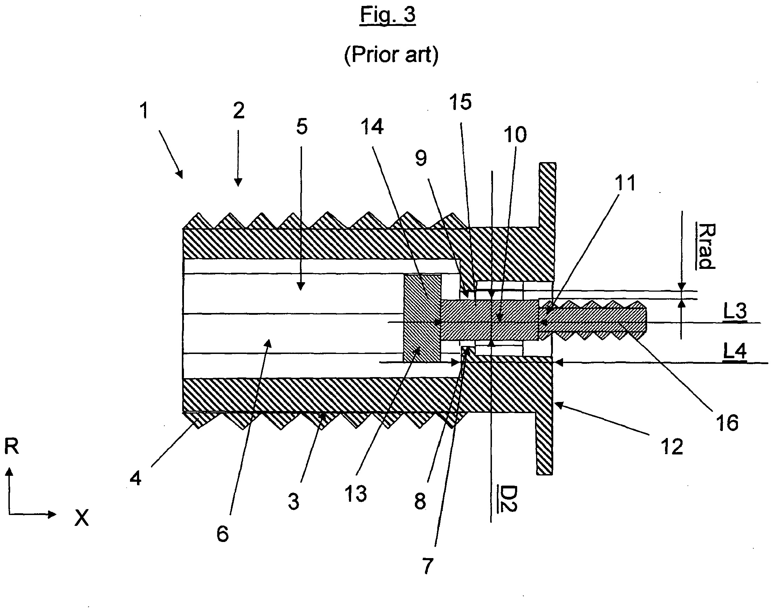

Figure 3 shows schematically a frame fixing comprising a fixing device 13 and a casing 2 according to Figure 2. The fixing device 13 can move freely in the bore 5, both in a rotational direction and in an axial direction X. The fixing device 13 comprises a head 14, a body 15 and a threaded part 16. L3 = the length of the body 15 in an axial direction along the central axis of the fixing device 13. L4 = the distance between the head 14 of the fixing device and the end surface 12 of the cylindrical unit 3 (excluding the head 14) along the central axis of the fixing device 13, when the head 14 of the fixing device 13 is in contact with the flange 8. D2 = the diameter of the body 15. Rradial = the maximal radial movement of the central axis of the fixing device 13 for given L1-L4, D1 and D2 in relation to the central axis of the cylindrical unit 3, when the fixing device 13 is moved parallel to the centre line of the bore 5 in a radial direction R.

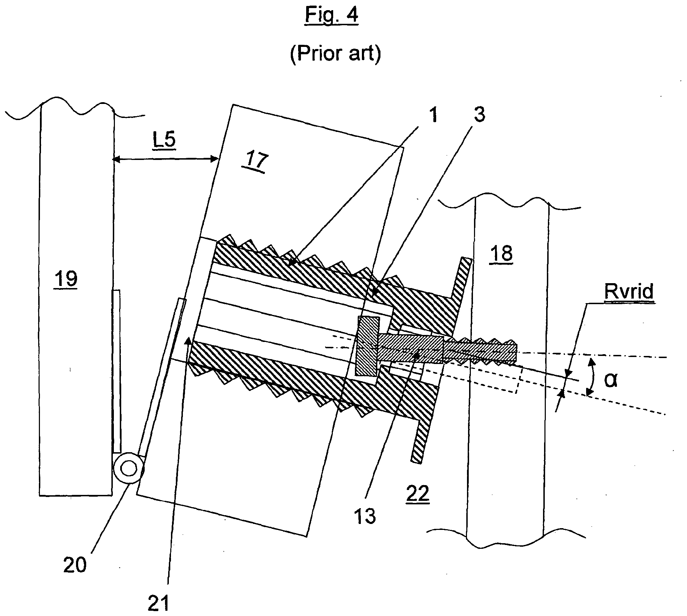

Figure 4 shows schematically a frame fixing 1 according to Figure 3 after installation in a frame 17 and a building 18. Figure 2 shows that a door 19 is attached to the frame by hinges 20. The fixing device 13 comprised in the frame fixing 1 is designed to be fixed into the building 18 and thereby create a fixing between the frame 17 and the building 18. The fixing device 13 is fitted into the bore 5 in such a way that the head 14 of the fixing device 13 and a part of the fixing device 13 that extends from the head 14 are hidden in the bore 5, but the larger part of the fixing device 13 protrudes from the cylindrical unit 3. The head 14 of the fixing device 13 is designed to make contact with the flange 8, during installation of the frame 17, by means of the pressure when the fixing device 13 is screwed into the building, as described below.

Figure 4 shows that a hole 21 has been made in the frame 17 into which the cylindrical unit 3 is screwed via the external threads 4 and using the tool that has been arranged in the matching-fit section 10 in the direction towards the door 19. The cylindrical unit 3 is initially screwed into the hole 21 in such a way that essentially the whole cylindrical unit 19 is hidden in the hole.

The frame 17 is thereafter arranged in an opening 22 arranged in the fabric of the building 18. The cylindrical unit 3 is thereafter screwed in the direction towards the fabric of the building 18 using a tool arranged in the first section 6 until the end surface 12 is in contact with the fabric of the building 18. The fixing device 13 is thereafter inserted into the bore from the inside of the frame 17, that is from the side of the frame 17 towards which the door 19 faces, after which the fixing device 19 is screwed into the fabric of the building 18 and creates a tension fixing between the frame fixing 1 (and thereby the frame) and the fabric of the building 18.

Figure 4 illustrates a well known problem, namely that the frame 17 can move in relation to the fabric of the building 18, as the fixing device 13 can move freely in a radial direction in relation to the cylindrical unit 3. The problems associated with such changes in position have already been discussed above.

Rpivot = the maximal pivoting movement of the central axis of the fixing device for given L1-L4, D1 and D2 in relation to the central axis of the cylindrical arrangement.

$$Rradial = (D1-D2)/2$$

$$\alpha = arctangens\ ((D1-D2)/L1) = \text{the angle between the central axis of the fixing device and the central axis of the controlling arrangement.}$$

$$Rpivot = L4 x tangens\ (\alpha) x 1/2$$

$$Rpivot = L4 x (D1-D2)/L1 x 1/2$$

It should be noted that, for a pivoted fixing device, Rpivot according to the above is an approximation. L4 is then measured when the central axis of the fixing device lies parallel to the central axis of the controlling device. The point on the central axis of the fixing device that constitutes the measurement point for Rradial and Rpivot is taken in the plane that coincides with the end surface of the cylindrical unit. In the event of pivoting, the same measurement point will be located slightly inside the said plane and the distance from the measurement point to the plane constitutes the approximation. The approximation is valid for small values of $\alpha$.

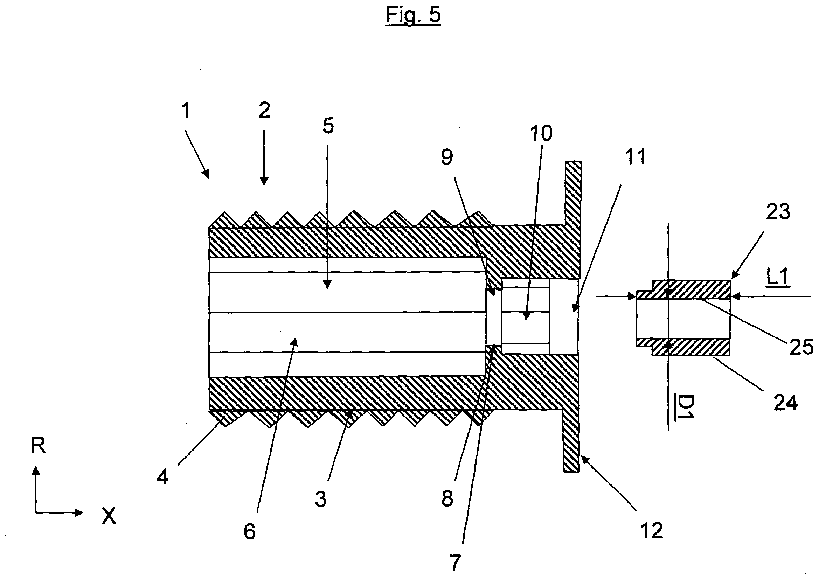

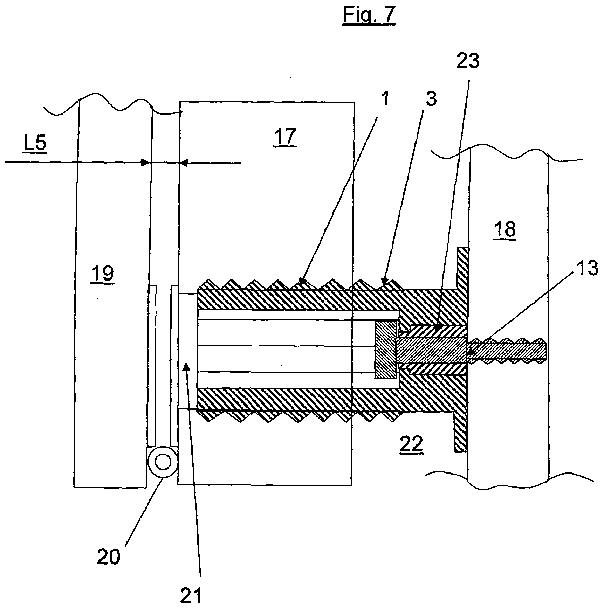

Figure 4 shows a length L5 that indicates an increase in the distance between the frame 17 and the door 19 on account of the frame having pivoted. The increase in the distance is comparable with the distance L5 between the frame 17 and 19 when the frame has not pivoted. The latter case is illustrated in Figure 7. The pivoting of the frame and the increase in L5 on the hinge side corresponds to a reduction in the distance between the frame 17 and the door 19 on the opposite side of the door. Figure 5 shows that L5 becomes smaller in the direction towards the hinges 20, which indicates a pivoting of the frame 17. If the frame had not pivoted, L5 would not have become smaller.

Figure 5 shows schematically a casing 2 of a frame fixing 1 according to a first embodiment of the invention. The frame fixing 1 comprises here an adapter 23 comprising an external part 24 with a shape that corresponds to the internal dimension of the matching-fit section 10 and the internal dimension of the third section 11, and an inner part 25 with an inner surface with corresponding dimensions to those of the inner surface of the controlling section 9 in the inner section of the flange 8. The inner part 25 of the adapter 23 thus comprises a part of the controlling section 9 of the frame fixing 1 and thereby increases the length of the controlling section 9 in an axial direction. An advantage of such an arrangement is that the tolerances of the controlling section in relation to the body of the fixing device can be increased, that is the clearance between the fixing device and the controlling section can be greater with increased length, while maintaining radial freedom of movement.

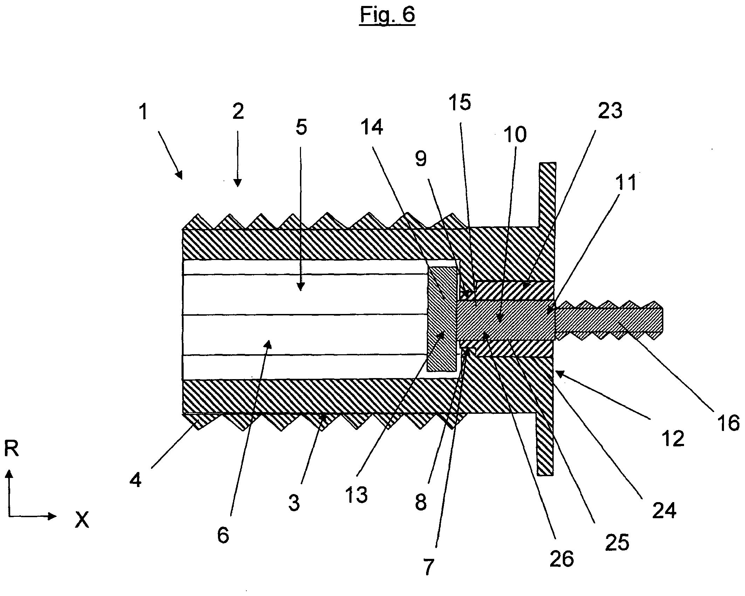

Figure 6 shows schematically a frame fixing 1 comprising a fixing device 13 and a casing 2 according to Figure 5. Figure 6 shows the adapter 23 fitted in the matching-fit section 10 and the fixing device 13 arranged in the casing 2 in the bore 26 that is created by the inner surface of the flange 8 and the inner surface of the adapter 25. The bore 26 that is created comprises the controlling section 9 of the frame fixing 1 according to the invention. Figure 6 shows that the body 15 of the fixing device 13 is the same length as the controlling section 9.

Figure 7 shows schematically a frame fixing according to Figure 6 after installation in a frame 17 and in the fabric of a building. A comparison is to be made here with the previously-known frame fixing in Figure 4.

L3 should always be at least equal to L1 as, for example, a bolt with a smaller L3 would mean that the threaded section of the bolt, that can have a different diameter to that of the body 15, would be within the controlling arrangement 9 and could change the conditions governing the freedom of movement of the fixing device 13.

According to the formulae above, it can be seen that when L1 increases, Rpivot and $\alpha$ decrease, but that Rpivot increases with the increase in L4. In the first instance of the first embodiment, L1 and L3 must thus be determined by L4 in order for the maximal permitted value of Rpivot not to be exceeded.

In Figure 7, it is the case that L1 = L2 = L3 = L4 which means that Rpivot = Rradial with the advantages that were discussed above. This does not affect the angle $\alpha$, but an increase in L1 reduces the angle $\alpha$ and reduces the possibility of incorrect positioning of the frame 17.

Figure 7 shows that L1 is of such a length and D1 and D2 are so determined in relation to each other that the frame 18 is not given any more room to pivot in such a way as is shown in Figure 4. Figure 7 also shows that L5 is essentially constant over the whole part that constitutes the space between the frame 17 and the door 19.

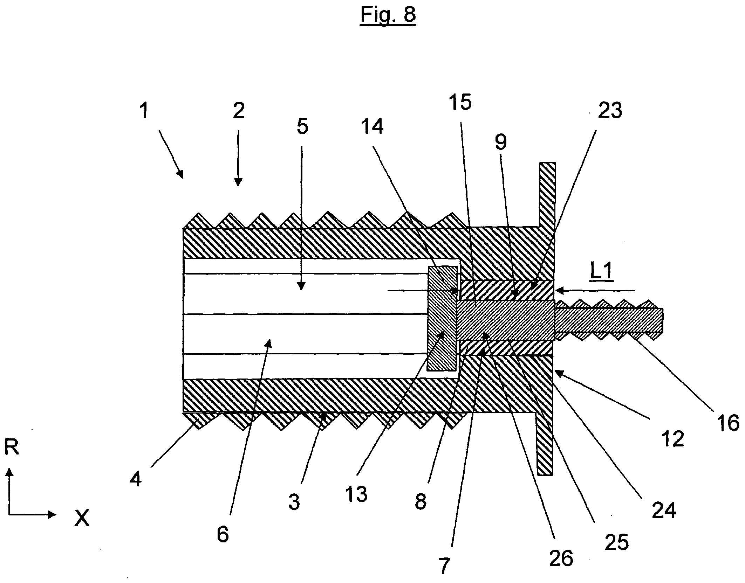

Figure 8 shows schematically a frame fixing 1 comprising a fixing device 13 and a casing 2 according to a second embodiment of the invention. The casing comprises here a flange 8 that extends the whole way to the end surface 12 of the cylindrical unit 3. The adapter 23 constitutes here the controlling section 9 that consists of the inner surface of the inner part 25 of the adapter 23. The adapter 23 comprises an outer part 24 with a shape that corresponds to the inner section of the flange 8. The bore 26 that is created corresponds to the controlling section 9 precisely as in Figure 6 and, in Figure 8, has such a length and such a tolerance in relation to the body 15 of the fixing device 13 that the radial freedom of movement Rradial of the fixing device 13 is limited in the same way as with the use of the adapter 23 in Figures 5-7.

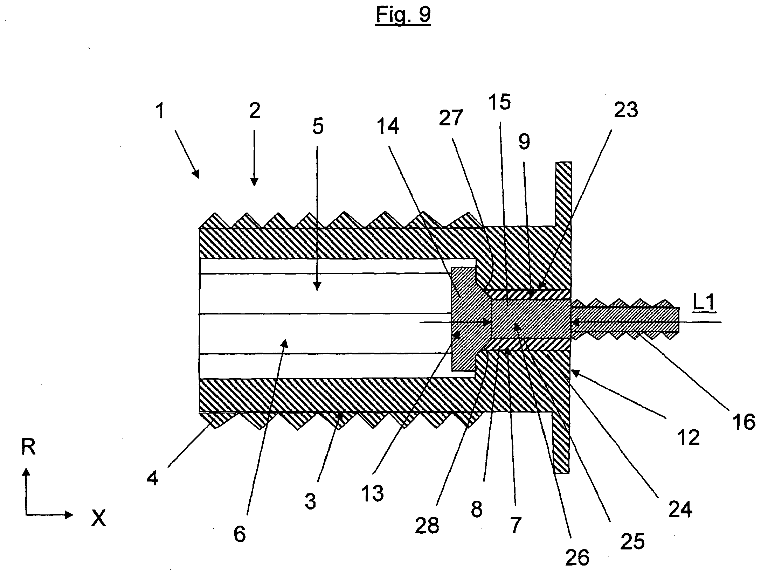

Figure 9 shows schematically a frame fixing 1 comprising a fixing device 13 and a casing 2 according to a third embodiment of the invention. As in Figure 8, the casing comprises a flange 8 that extends the whole way to the end surface 12 of the cylindrical unit 3. The adapter 23 constitutes the controlling section 9 that consists of the inner surface of the inner part 25 of the adapter 23. The adapter 23 comprises an outer part 24 with a shape that corresponds to the inner section of the flange 8. Figure 9 shows that the flange 8 and the adapter comprise specially-modified sections 27 that together form a truncated cone. The head 14 of the fixing device has a corresponding section 28. The fixing device 13 is thus fitted into the controlling section 9 in such a way that the specially-modified part 28 of the head 14 is fitted into the modified section 27 of the flange 8 and the body 15 of the fixing device 13 is fitted into the controlling section 9. An advantage of the embodiment is that the specially-designed section 27 of the flange 8 forms a part of the controlling section 9 and controls the specially-designed part 28 of the fixing device 13 in such a way that the movement of the fixing device 13 in relation to the cylindrical unit 3 is minimized. This is due to the fact that, during installation of the frame 17, the head 14 of the fixing device is in contact with the flange 8 by means of the pressure when the fixing device is screwed into the building 18 as described above.

In another embodiment of the invention, it is only the flange 8 that has specially-modified sections 27 in the form of a truncated cone. The adapter 23 can thus have straight end sections or angled end sections.

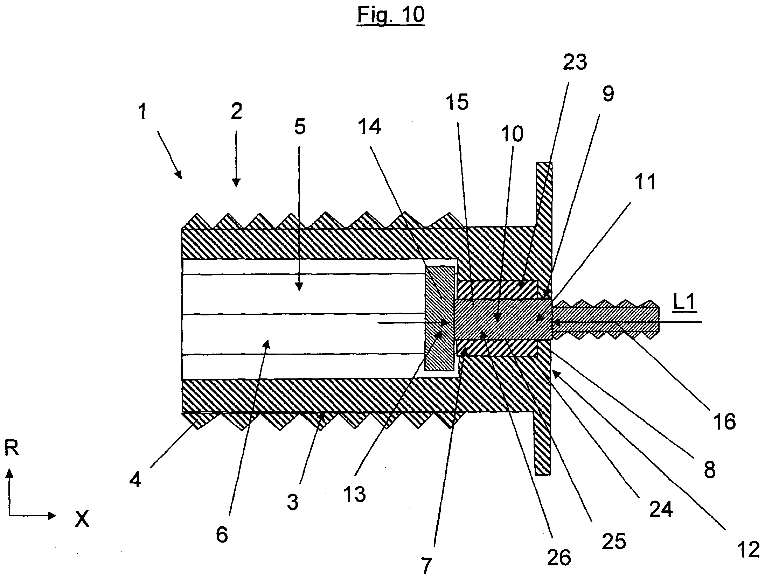

Figure 10 shows schematically a frame fixing 1 comprising a fixing device 13, a casing 2 and an adapter 23 according to a fourth embodiment of the invention. Figure 10 shows that, in the axial direction, the bore 5 comprises a sequence of a first section 6, a second section 7 and a third section 11. Figure 10 shows that the first section 6 is designed in such a way that a fixing device 13 with a head 14 can be arranged to rotate in the first section of the bore 5. Figure 10 shows that the second section 7 comprises a specially-modified matching-fit section 10 and that the third section 11 comprises a flange 8 comprising an inner section that creates a controlling section 9. The matching-fit section 10 is here located between the first section 6 and the controlling section 9. The controlling section 9 is located between the matching-fit section 10 and an end surface 12 of the cylindrical unit 3. The end surface 12 has an extent in a plane in the radial direction. The matching-fit section 10 is intended to receive an adapter 23 with a corresponding shape to that of the matching-fit section 10, for example with a cross section that is round, triangular, four-sided, five-sided, hexagonal, or other geometrical shape. The adapter 23 comprises an outer part 24 with a shape that corresponds to that of the matching-fit section 10 and an inner part 25 with corresponding dimensions to those of the controlling section 9 in the flange 8. Together with the inner section, the inner part 25 of the adapter 23 creates an elongated controlling section 9 as a result of a bore 26 having been created. The elongated controlling section thus forms a part of controlling section 9 of the frame fixing 1 and thereby increases the length of the controlling section 9 in the axial direction.

An advantage of such an arrangement is that the tolerances of the controlling section 9 in relation to the body 15 of the fixing device 13 can be increased, that is the clearance between the fixing device and the controlling section can be larger with increased length while maintaining the radial freedom of movement.

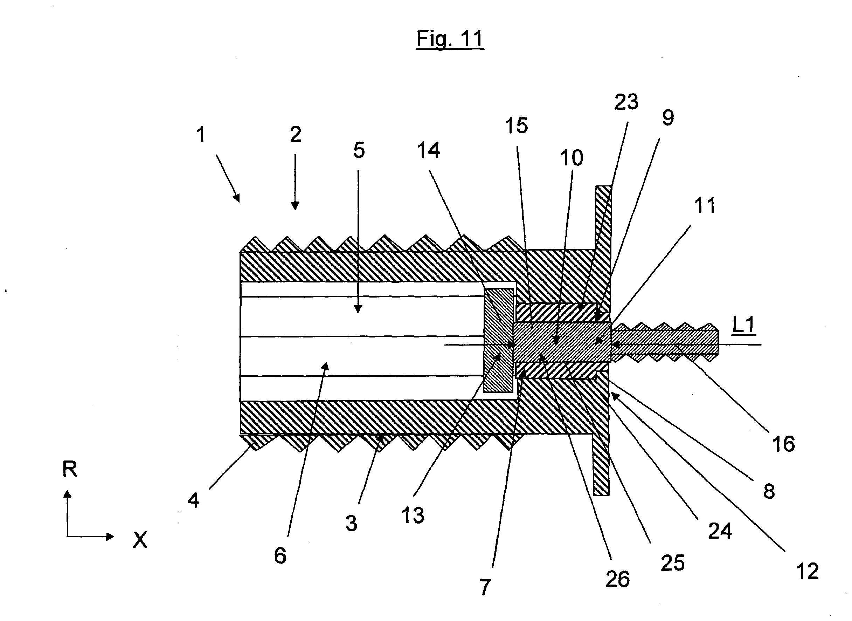

Figure 11 shows an alternative fourth embodiment in which the adapter 23 is designed to fit into both the matching-fit section 10 and the inner section of the flange. The inner part 25 of the adapter 23 thus forms the whole controlling section 9 of the frame fixing 1 and can be adapted to the required tolerances. Increased tolerances enable a less expensive method to be used for manufacturing the frame fixing and, in addition, previously-known frame fixings can be converted to create a better and more robust frame fixing 1. As in Figure 2, Figure 11 shows that the second section comprises the matching-fit section 10 and that the flange 8 is arranged in the third section.

Yet another advantage of the embodiments shown in Figures 10 and 11 is that the adapter is not liable to be pushed out of the bore 5 when the fixing device is inserted into the bore 45, as the flange 8 forms a part that prevents further movement of the adapter 23. As the adapter 23 cannot be pushed out of the bore 5 of the cylindrical unit 3, the tolerances can be small between the body 16 and the bore 26 that was created, that is between the body 15 and the controlling section 9.

The inner section of the flange 8 can be circular or can have a cross section in accordance with the matching-fit section described in association with Figure 1 that permits the insertion of a tool for rotation of the cylindrical unit 3 during installation in a frame.

The adapter 23 can be manufactured in plastic and/or metal and/or any other material that can be formed simply and inexpensively according to the above.

An advantage of a relatively soft adapter 23 is that the fixing device 13 can form the adapter 23 by exerting an axial pressure when the fixing device is arranged in a receiving unit, for example in the form of a wall. By "form" is meant here that the shape of the adapter is changed as a result of pressure. The adapter can, for example, be slightly longer than the bore 5 which means that the protruding part of the adapter is pressed into the bore when the head 14 of the fixing device 13 is caused to exert a pressure on the adapter. When the protruding part is pressed into the bore 5, the quantity of material in the bore is increased, which means that the controlling section becomes narrower, which, in turn, means that the freedom of movement of the fixing device is reduced.

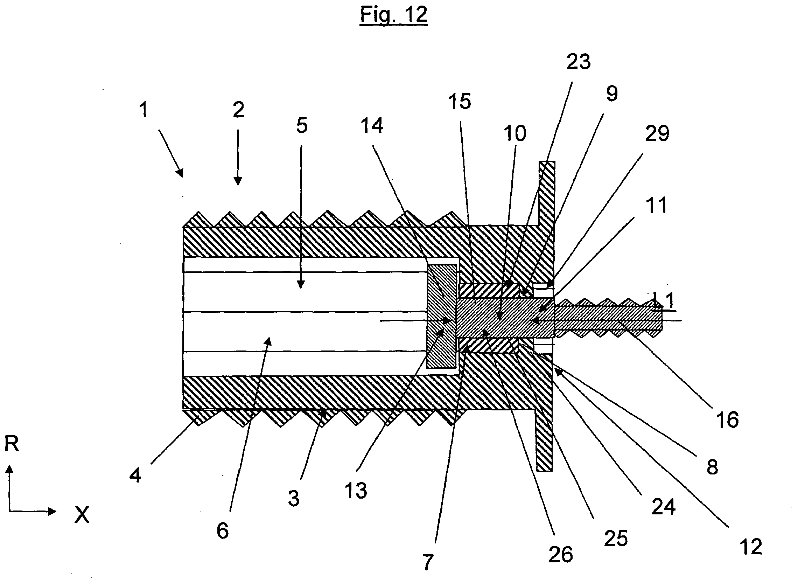

Figure 12 shows schematically a frame fixing 1 comprising a fixing device 13, a casing 2 and an adapter 23 according to a fifth embodiment of the invention. The frame fixing shown in Figure 12 is identical to the frame fixing shown in Figure 10 with the advantages that are mentioned in association with this, but with the following differences. The frame fixing in Figure 12 has a second matching-fit section 29 located between the flange 8 and the end surface 12 of the cylindrical unit 3. As with the first matching-fit section shown in Figure 5, the second matching-fit section 29 can be arranged to receive a tool for rotation of the cylindrical unit 3 during installation in a frame.

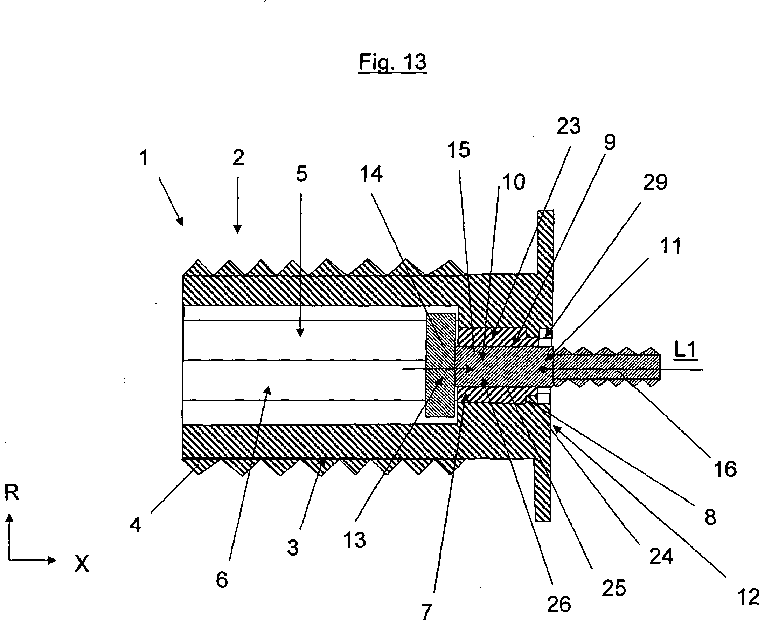

Figure 13 shows schematically a frame fixing 1 according to a sixth embodiment of the invention. The frame fixing shown in Figure 13 is identical to the frame fixing 1 shown in Figure 11 with the advantages that are mentioned in association with this, but with the following differences. The frame fixing in Figure 13 has a second matching-fit section 29 located between the flange 8 and the end surface 12 of the cylindrical unit 3. As with the first matching-fit section shown in Figure 5, the second matching-fit section 29 can be arranged to receive a tool for rotation of the cylindrical unit 3 during installation in a frame.

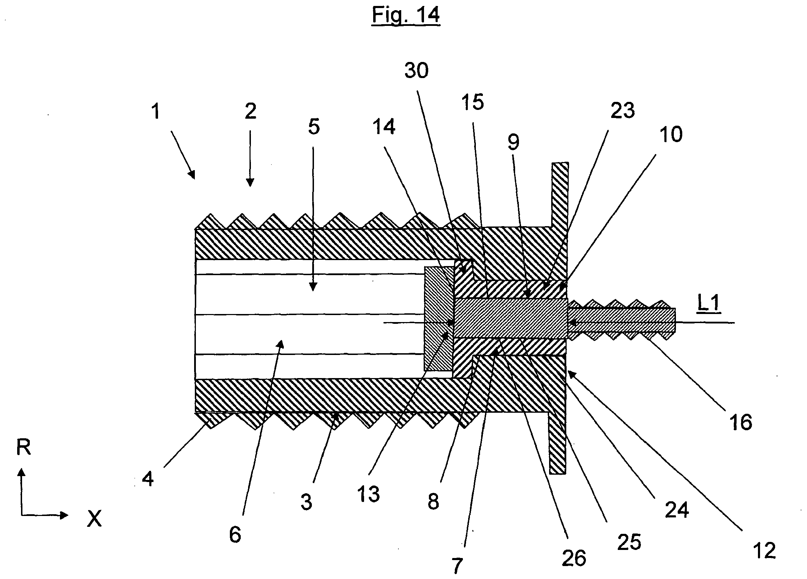

Figure 14 shows schematically a frame fixing 1 comprising a fixing device 13, a casing 2 and an adapter 23 according to a seventh embodiment of the invention. The frame fixing 1 shown in Figure 14 is identical to the frame fixing 1 shown in Figure 8, but with the difference that the adapter 23 comprises a second flange 30 intended to be arranged between the head 14 of the fixing device 13 and the flange 8. In addition, Figure 14 shows that the frame fixing comprises a matching-fit section 10 as shown in Figure 7 arranged between the flange 8 and the end surface 12 of the casing 2. The outer part 24 of the adapter is designed to fit into the bore 5 that is created by the inner surface of the first section 6 and the inner surface of the inner section of the flange 8. The first section 6 of the bore 5 is advantageously arranged to receive a tool for rotation of the casing 2. The first section 6 can thus be designed to have an angular shape, for example it can be triangular, four-sided, five-sided, hexagonal, etc, as has been described above. The second flange 30 of the adapter 23 is advantageously designed in a corresponding way in order to fit into the profile that is created by the bore 5 in the first section. The adapter 23 can, in addition, be designed to fit into the matching-fit section 10 when the matching-fit section 10 is designed with projections that extend into the bore 5 in such a way that the adapter can be in contact with the projections. The matching-fit section 10 in Figure 14 can be omitted in accordance with what was described in association with Figure 8.

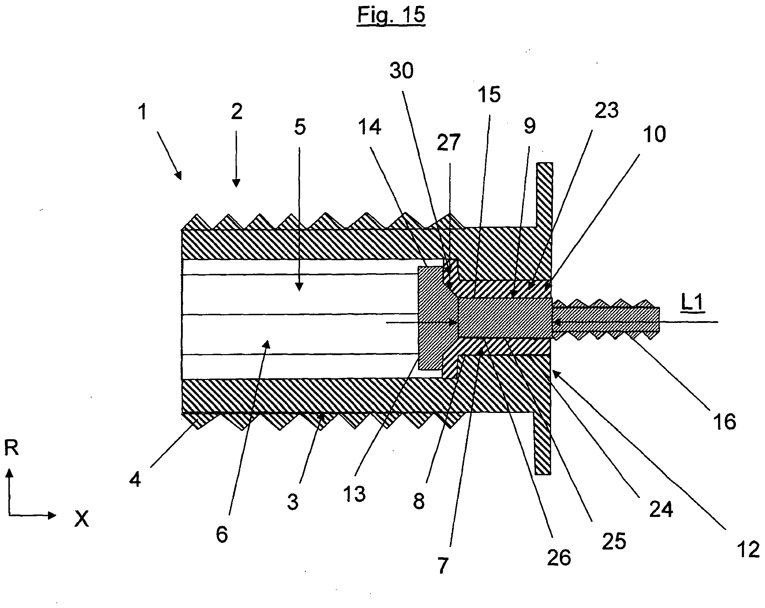

Figure 15 shows schematically a frame fixing 1 comprising a fixing device 13, a casing 2 and an adapter 23 according to an eighth embodiment of the invention. The frame fixing 1 shown in Figure 15 is identical to the frame fixing 1 shown in Figure 9, but with the difference that the adapter 23 comprises a second flange 30 intended to be arranged between the head 14 of the fixing device 13 and the flange 8. Figure 15 shows that the second flange comprises a specially-modified section 27 in the form of a truncated cone and that the head 14 of the fixing device has a corresponding shape. The specially-modified sections 27 provide a stable contact between the fixing device 13 and the adapter 23.

In addition, Figure 15 shows that the frame fixing comprises a matching-fit section 10 as shown in Figure 7 arranged between the flange 8 and the end surface 12 of the casing 2. The outer part 24 of the adapter is designed to fit into the bore 5 that is created by the inner surface of the first section 6 and the inner surface of the flange 8. The first section 6 of the bore 5 is advantageously arranged to receive a tool for rotation of the casing 2. The first section 6 can thus be designed to have an angular shape, for example it can be triangular, four-sided, five-sided, hexagonal, etc, as has been described above. The second flange 30 of the adapter 23 is advantageously designed in a corresponding way in order to fit into the profile that is created by the bore 5 in the first section. In addition, the adapter 23 can be designed to fit into the matching-fit section 10 when the matching-fit section 10 is designed with projections that extend into the bore 5 in such a way that the adapter can be in contact with the projections. The matching-fit section 10 in Figure 15 can be omitted in accordance with what was described in association with Figure 8.

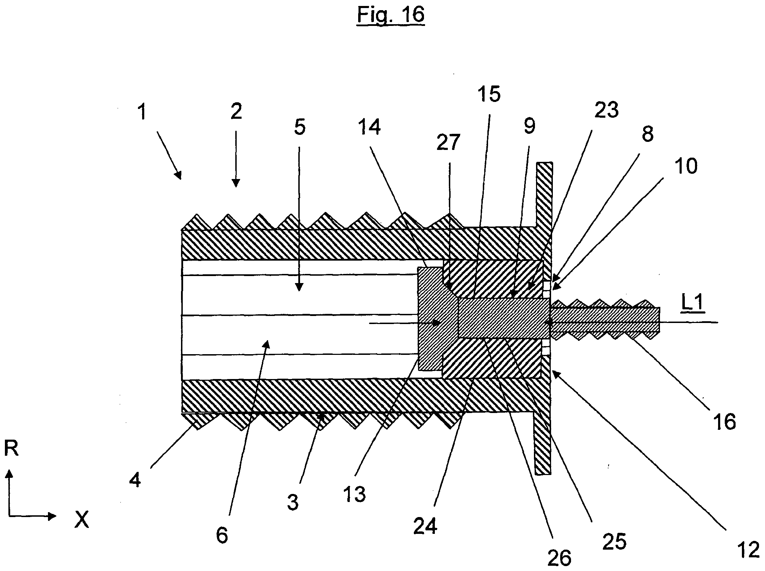

Figure 16 shows schematically a frame fixing 1 comprising a fixing device 13, a casing 2 and an adapter 23 according to a ninth embodiment of the invention. The frame fixing 1 shown in Figure 16 is identical to the frame fixing 1 shown in Figure 10, but with the difference that the casing only comprises a first section 6 and a flange 8. The bore 5 thus consists of the inner surface of the first section 6 and the inner surface of the flange 8. The flange 8 can comprise a specially-modified matching-fit section 10 arranged to receive a tool for rotation of the casing during installation, but can also be designed with a circular cross section.

In Figure 16, the adapter 23 is designed to fit into the profile that is created by the inner surface of the first section 6. The outer part 24 of the adapter is designed to fit into the bore 5 that is created by the inner surface of the first section 6 and the inner surface of the flange 8. The first section 6 of the bore 5 is advantageously arranged to receive a tool for rotation of the casing 2. The first section 6 can thus be designed to have an angular shape, for example it can be triangular, four-sided, five-sided, hexagonal, etc, as has been described above. The outer part 23 of the adapter 23 is advantageously designed in a corresponding way in order to fit into the profile that is created by the bore 5 in the first section.

The adapter 23 has a length L1 in the bore 5 measured from the flange. The inner part 25 of the adapter 23 creates a bore with a diameter D1, determined by the length L1, that constitutes a controlling section 9 for the fixing device 13. The fixing device 13 is intended to be arranged in the controlling section 9 and the adapter 23 is designed to prevent too much movement of the fixing device 13 in relation to the central axis of the cylindrical unit 3.

In another embodiment of the invention, the adapter 23 comprises a second flange 30 designed to fit into the part of the bore 5 that is created by the inner surface of the flange 8. An advantage of this is that the length of the controlling section is further increased, which reduces the demands on the tolerances in association with the diameter D1.

Figure 16 shows that the adapter 23 comprises a specially-modified section 27 in the form of a truncated cone and that the head 14 of the fixing device 13 has a corresponding shape. The specially-modified sections 27 provide a stable contact between the fixing device 13 and the adapter 23. The adapter 23 and the head 14 can, however, be designed without the specially-modified sections 27, that is both the adapter 23 and the head can be designed with straight sections.

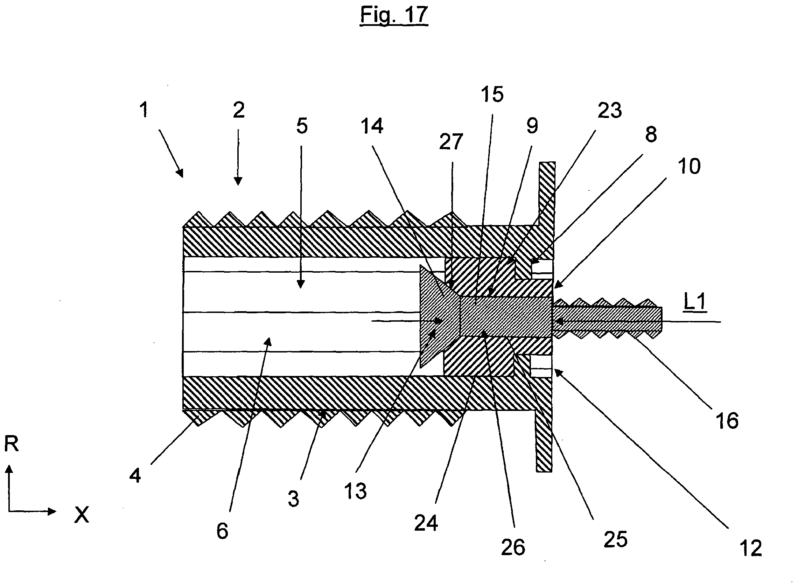

Figure 17 shows schematically a frame fixing comprising a fixing device, a casing and an adapter according to a tenth embodiment of the invention. The frame fixing 1 shown in Figure 17 is identical to the frame fixing 1 shown in Figure 16, but with the difference that the casing only comprises a first section 6, a flange 8 and a matching-fit section 10. The flange 8 is located between the matching-fit section 10 and the first section 6. The matching-fit section 10 is arranged to receive a tool for rotation of the casing during installation. The bore 5 thus consists of the inner surface of the first section 6, the inner surface of the flange 8 and the inner surface of the matching-fit section 10. The inner surface of the flange 8 has advantageously an essentially circular cross section.

In Figure 17, the adapter 23 is designed to fit into the profile that is created by the inner surface of the first section 6. The outer part 24 of the adapter is designed to fit into the bore 5 that is created by the inner surface of the first section 6 and the inner surface of the flange 8. The first section 6 of the bore 5 is advantageously arranged to receive a tool for rotation of the casing 2. The first section 6 can thus be designed to have an angular shape, for example it can be triangular, four-sided, five-sided, hexagonal, etc, as has been described above. The outer part 23 of the adapter 23 is advantageously designed in a corresponding way in order to fit into the profile that is created by the bore 5 in the first section.

The adapter 23 has a length L1 in the bore 5 measured from the flange. The inner part 25 of the adapter 23 creates a bore with a diameter D1 determined by the length L1, that constitutes a controlling section 9 for the fixing device 13. The fixing device 13 is intended to be arranged in the controlling section 9 and the adapter 23 is designed to prevent too much movement of the fixing device 13 in relation to the central axis of the cylindrical unit 3.

Figure 17 shows that the adapter 23 comprises a second flange 30 intended to fit into the part of the bore 5 that is created by the inner surface of the flange 8. Figure 17 also shows that the second flange is arranged to fit into the matching-fit section 10. The matching-fit section 10 comprises a number of projections that extend in the direction towards the centre of the bore. The projections form contact surfaces for the adapter 23 in such a way that the position of the adapter 23 is locked in the matching-fit section. The adapter 23 has thus an extent in the bore 5 between the head 14 of the fixing device 13 and the end surface 12 of the cylindrical unit. An advantage of this is that the length of the controlling section is further increased, which reduces the demands on the tolerances in association with the diameter D1. It should, however, be mentioned that the second flange 30 can be shorter, that is it can terminate before the end surface 12. The adapter 23 can thus have a length that can vary from an extent that consists of the distance from the head 14 to at least a short distance into the flange to an extent that consists of the distance between the head 14 and the end surface 12.

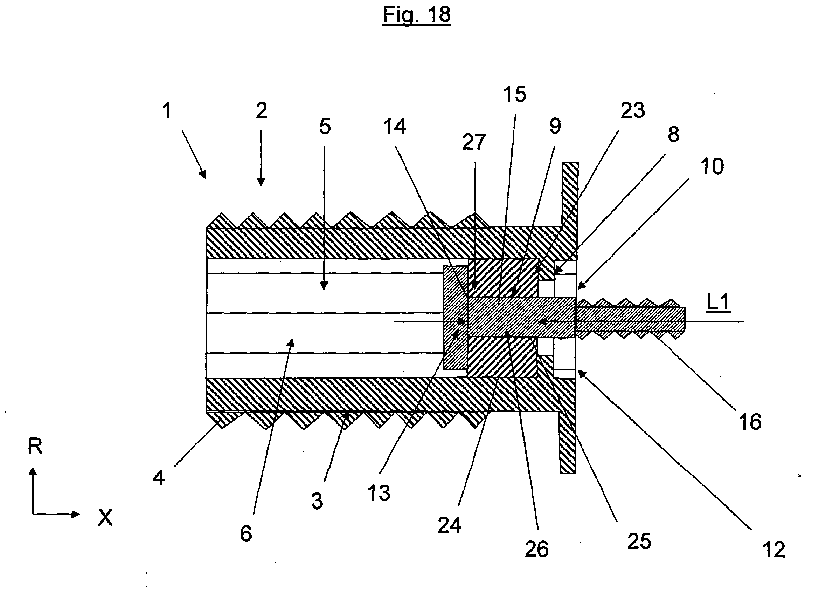

Figure 17 shows that the adapter 23 comprises a specially-modified section 27 in the form of a truncated cone and that the head 14 of the fixing device 13 has a corresponding shape. The specially-modified sections 27 provide a stable contact between the fixing device 13 and the adapter 23. The adapter 23 and the head 14 can, however, be designed without the specially-modified sections 27, that is both the adapter 23 and the head can be designed with straight sections, which is shown in Figure 18.

Figure 18 shows schematically a frame fixing 1 comprising a fixing device 13, a casing 2 and an adapter 23 according to an eleventh embodiment of the invention. The frame fixing 1 shown in Figure 18 is identical to the frame fixing 1 shown in Figure 17, but with the difference that the adapter 23 and the fixing device do not have the specially-modified surfaces (27 in Figure 17) and have essentially straight contact surfaces that lie against each other. Another difference is that in Figure 18 the adapter 23 extends between the head 14 and the flange 8.

Both Figure 17 and Figure 18 show that the flange 8 is located between the matching-fit section 10 and the first section 6. In the embodiments shown, the matching-fit section 10 has the same dimensions as the first section 6, that is they have the same shape. An advantage of this is that the same tool can be used in the matching-fit section 10 as in the first section 6.

A combination of the embodiments described above is possible within the framework of the invention. As an example, it can be mentioned that a combination of the embodiments in Figures 17 and 18 means that the adapter 18 can have specially-modified sections in accordance with Figure 17 but can lack a second flange 30 that is shown in Figure 18. A combination of Figures 17 and 18 also means that the adapter can lack the specially-modified sections that are shown in Figure 17 but can comprise a second flange 30 as shown in Figure 18.

A combination of Figures 5-7, 10-13 and 16-18 would result in a first adapter 23 on one side of the flange 8 and a second adapter 23 on the other side of the flange, with the inner parts of the two adapters together creating the controlling section 9. The inner surface of the flange 8 can also be included and create the controlling section 9 together with the two adapters 23.

The invention is thus not limited to the embodiments described above, but can be varied within the framework of the attached claims. As an example, it can be mentioned that the adapter 23 can comprise such a specially-modified section as that described in association with Figure 9.

**Claims**

1. Frame fixing (1) comprising a cylindrical unit (3) with a threaded outer casing (4) designed with a bore (5) that passes through in an axial direction comprising a first section (6) designed with a cross section in a radial direction that is suitable for the insertion of a tool that is to rotate the cylindrical unit and a flange (8) comprising an inner section (9), with the frame fixing (1) comprising a fixing device (13) that can be inserted through the first section (6) into the bore (5; 26) and the inner section (9), wherein the frame fixing comprises an adapter arranged at least partially in the bore, which adapter comprises an outer part (24) arranged to fit into the bore (5) and an inner part (25) arranged to constitute at least a part of a controlling section (9), with the controlling section (9) having a cross section D1 (D1) in a radial direction that is determined by the length I_1 ( L1) of the controlling section (9) in an axial direction in such a way that the controlling section (9) limits the radial freedom of movement of the central axis of the fixing device (13) in relation to the central axis of the controlling section (9) to a movement of a predetermined maximal size at the end surface of the cylindrical unit (3), **characterized in that** the adapter (23) is arranged to be inserted through the first section (6) to the inner section (9) of the flange (8), where the flange (8) prevents further movement of the adapter (23) in the inserting direction.

2. Frame fixing (1) according to Claim 1, **characterized in that** the cross section D1 (D1) of the controlling section (9) in a radial direction is determined by a cross section D2 (D2) of a body (15) of the fixing device (13) with a length L3 (L3).

3. Frame fixing (1) according to Claim 1 or 2, **characterized in that** the bore (5) comprises a specially-modified matching-fit section (10) located in the axial direction on the other side of the flange (8) in relation to the first section (6).

4. Frame fixing (1) according to Claim 1 or 2, **characterized in that** the bore (5) comprises only the first section (6) and the flange (8).

5. Frame fixing (1) according to any one of the preceding claims, **characterized in that** the adapter (23) is located at least in the first section (6) and **in that** the adapter comprises an outer part (24) with a shape that corresponds to the inner dimensions of the first section (6), with the inner part (25) of the adapter (23) comprising at least a part of the controlling section (9).

6. Frame fixing (1) according to Claim 5, **characterized in that** the adapter (23) is located in the first section (6) and in the flange (8) and **in that** the adapter comprises an outer part (24) with a shape that corresponds to the inner dimensions of the first section (6) and the inner dimensions of the flange (8), with the inner part (25) of the adapter (23) comprising at least a part of the controlling section (9).

7. Frame fixing (1) according to Claim 1 or 2, **characterized in that** the flange (8) extends all the way to an end surface (12) of the cylindrical unit (3), with the inner surface of the flange (8) creating the controlling section (9).

8. Frame fixing (1) according to any one of the preceding claims, **characterized in that** the controlling section (9) and the body (15) are designed according to the following parameters and relationships; L1 = the length of the controlling section in an axial direction; L2 = the distance between the controlling section and the end surface of the cylindrical unit (including the controlling section); D1 = the diameter of the controlling section; L3 = the length of the body in an axial direction along the central axis of the fixing device; L4 = the distance between the head of the fixing device and the end surface of the cylindrical unit (excluding the head) along the central axis of the fixing device when the head of the fixing device is in contact with the flange; D2 = the diameter of the body; a = the angle between the central axis of the fixing device and the central axis of the controlling arrangement; Rradial = the maximal radial movement of the central axis of the fixing device for given L1-L4, D1 and D2 in relation to the central axis of the cylindrical arrangement; Rpivot = the maximal pivoting movement of the central axis of the fixing device for given L1-L4, D1 and D2 in relation to the central axis of the cylindrical arrangement; Rradial = (D1-D2)/2; a = arctangens ((D1-D2)/L1); Rpivot = L4xtangens (a)x1/2; Rpivot = L4x(D1-D2)/L1x1/2.

**9.** Frame fixing (1) according to Claim 6, **characterized in that** L2 greater than or equal to L1; L1 less than or equal to L3; and where L4 less than or equal to L3.


**Patentansprüche**

**1.** Rahmenbefestigung (1), umfassend eine zylindrische Einheit (3) mit einem Außengehäuse (4) mit Gewinde, das mit einer Bohrung (5) ausgebildet ist, die in einer Axialrichtung hindurch verläuft, umfassend einen ersten Abschnitt (6), der mit einem Querschnitt in einer Radialrichtung ausgebildet ist, der für die Einführung eines zum Drehen der zylindrischen Einheit vorgesehenen Werkzeugs geeignet ist, und einen Flansch (8), der einen Innenabschnitt (9) umfasst, wobei die Rahmenbefestigung (1) eine Befestigungsvorrichtung (13) umfasst, die durch den ersten Abschnitt (6) in die Bohrung (5; 26) und den Innenabschnitt (9) eingeführt werden kann, wobei die Rahmenbefestigung einen zumindest teilweise in der Bohrung angeordneten Adapter umfasst, welcher Adapter einen Außenteil (24) umfasst, der zum Passen in die Bohrung (5) angeordnet ist, und einen Innenteil (25), der zum Darstellen zumindest eines Teils eines Steuerabschnitts (9) angeordnet ist, wobei der Steuerabschnitt (9) einen Querschnitt D1 (D1) in einer Radialrichtung aufweist, der in einer Axialrichtung durch die Länge l_1 (L1) des Steuerabschnitts (9) festgelegt ist, sodass der Steuerabschnitt (9) die radiale Bewegungsfreiheit der Mittelachse der Befestigungsvorrichtung (13) in Bezug auf die Mittelachse des Steuerabschnitts (9) auf eine Bewegung mit einer vorbestimmten Maximalgröße an der Endfläche der zylindrischen Einheit (3) begrenzt, **dadurch gekennzeichnet, dass** der Adapter (23) dafür angeordnet ist, durch den ersten Abschnitt (6) in den Innenabschnitt (9) des Flanschs (8) eingeführt zu werden, wobei der Flansch (8) eine weitere Bewegung des Adapters (23) in der Einführrichtung verhindert.

**2.** Rahmenbefestigung (1) nach Anspruch 1, **dadurch gekennzeichnet, dass** der Querschnitt D1 (D1) des Steuerabschnitts (9) in einer Radialrichtung durch einen Querschnitt D2 (D2) eines Körpers (15) der Befestigungsvorrichtung (13) mit einer Länge L3 (L3) festgelegt ist.

**3.** Rahmenbefestigung (1) nach Anspruch 1 oder 2, **dadurch gekennzeichnet, dass** die Bohrung (5) einen speziell modifizierten Passsitzabschnitt (10) umfasst, der sich in der Axialrichtung an der anderen Seite des Flanschs (8) in Bezug auf den ersten Abschnitt (6) befindet.

**4.** Rahmenbefestigung (1) nach Anspruch 1 oder 2, **dadurch gekennzeichnet, dass** die Bohrung (5) nur den ersten Abschnitt (6) und den Flansch (8) umfasst.

**5.** Rahmenbefestigung (1) nach einem der vorhergehenden Ansprüche, **dadurch gekennzeichnet, dass** sich der Adapter (23) zumindest in dem ersten Abschnitt (6) befindet, und dadurch, dass der Adapter einen Außenteil (24) mit einer Form umfasst, die den Innenabmessungen des ersten Abschnitts (6) entspricht, wobei der Innenteil (25) des Adapters (23) zumindest einen Teil des Steuerabschnitts (9) umfasst.

**6.** Rahmenbefestigung (1) nach Anspruch 5, **dadurch gekennzeichnet, dass** sich der Adapter (23) in dem ersten Abschnitt (6) und in dem Flansch (8) befindet, und dadurch, dass der Adapter einen Außenteil (24) mit einer Form umfasst, die den Innenabmessungen des ersten Abschnitts (6) und den Innenabmessungen des Flanschs (8) entspricht, wobei der Innenteil (25) des Adapters (23) zumindest einen Teil des Steuerabschnitts (9) umfasst.

**7.** Rahmenbefestigung (1) nach Anspruch 1 oder 2, **dadurch gekennzeichnet, dass** sich der Flansch (8) über den gesamten Weg zu einer Endfläche (12) der zylindrischen Einheit (3) erstreckt, wobei die Innenfläche des Flanschs (8) den Steuerabschnitt (9) bildet.

**8.** Rahmenbefestigung (1) nach einem der vorhergehenden Ansprüche, **dadurch gekennzeichnet, dass** der Steuerabschnitt (9) und der Körper (15) gemäß den folgenden Parametern und Beziehungen ausgebildet sind: L1 = die Länge des Steuerabschnitts in einer Axialrichtung; L2 = der Abstand zwischen dem Steuerabschnitt und der Endfläche der zylindrischen Einheit (einschließlich des Steuerabschnitts); D1 = der Durchmesser des Steuerabschnitts; L3 = die Länge des Körpers in einer Axialrichtung entlang der Mittelachse der Befestigungsvorrichtung; L4 = der Abstand zwischen dem Kopf der Befestigungsvorrichtung und der Endfläche der zylindrischen Einheit (ausschließlich des Kopfes) entlang der Mittelachse der Befestigungsvorrichtung, wenn der Kopf der Befestigungsvorrichtung mit dem Flansch in Kontakt ist; D2 = der Durchmesser des Körpers; a = der Winkel zwischen der Mittelachse der Befestigungsvorrichtung und der Mittelachse der Steueranordnung; Rradial = die maximale Radialbewegung der Mittelachse der Befestigungsvorrichtung für gegebene L1-L4, D1 und D2 in Bezug auf die Mittelachse der zylindrischen Anordnung; Rpivot = die maximale Schwenkbewegung der Mittelachse der Befestigungsvorrichtung für gegebene L1-L4, D1 und D2 in Bezug auf die Mittelachse der zylindrischen Anordnung; Rradial = (D1-D2)/2; a = arctangens ((D1-D2)/L1); Rpivot = L4 x tangens (a) x 1/2; Rpivot = L4 x (D1-D2)/L1 x 1/2.

9. Rahmenbefestigung (1) nach Anspruch 6, **dadurch gekennzeichnet, dass** L2 größer oder gleich L1; L1 kleiner oder gleich L3; und wobei L4 kleiner oder gleich L3.

**Revendications**

1. Fixation de cadre (1) comprenant une unité cylindrique (3) avec un boîtier externe fileté (4) conçu avec un alésage (5) qui le traverse dans une direction axiale comprenant une première section (6) conçue avec une section transversale dans une direction radiale qui est appropriée pour l'introduction d'un outil qui doit faire tourner l'unité cylindrique et une bride (8) comprenant une section interne (9), la fixation de cadre (1) comprenant un dispositif de fixation (13) qui peut être introduit à travers la première section (6) dans l'alésage (5 ; 26) et la section interne (9), la fixation de cadre comprenant un adaptateur disposé au moins partiellement dans l'alésage, lequel adaptateur comprend une partie externe (24) agencée pour s'adapter dans l'alésage (5) et une partie interne (25) agencée pour constituer au moins une partie d'une section de commande (9), la section de commande (9) ayant une section transversale D1 (D1) dans une direction radiale qui est déterminée par la longueur l_1 (L1) de la section de commande (9) dans une direction axiale de telle sorte que la section de commande (9) limite la liberté radiale de mouvement de l'axe central du dispositif de fixation (13) par rapport à l'axe central de la section de commande (9) à un mouvement d'une dimension maximale prédéterminée au niveau de la surface d'extrémité de l'unité cylindrique (3), **caractérisée par le fait que** l'adaptateur (23) est agencé pour être introduit à travers la première section (6) dans la section interne (9) de la bride (8), la bride (8) empêchant un mouvement supplémentaire de l'adaptateur (23) dans la direction d'introduction.

2. Fixation de cadre (1) selon la revendication 1, **caractérisée par le fait que** la section transversale D1 (D1) de la section de commande (9) dans une direction radiale est déterminée par une section transversale D2 (D2) d'un corps (15) du dispositif de fixation (13) avec une longueur L3 (L3).

3. Fixation de cadre (1) selon la revendication 1 ou 2, **caractérisée par le fait que** l'alésage (5) comprend une section d'adaptation spécialement modifiée (10) située dans la direction axiale sur l'autre côté de la bride (8) par rapport à la première section (6).

4. Fixation de cadre (1) selon la revendication 1 ou 2, **caractérisée par le fait que** l'alésage (5) comporte uniquement la première section (6) et la bride (8).

5. Fixation de cadre (1) selon l'une quelconque des revendications précédentes, **caractérisée par le fait que** l'adaptateur (23) est situé au moins dans la première section (6) et **par le fait que** l'adaptateur comprend une partie externe (24) avec une forme qui correspond aux dimensions internes de la première section (6), la partie interne (25) de l'adaptateur (23) comprenant au moins une partie de la section de commande (9).

6. Fixation de cadre (1) selon la revendication 5, **caractérisée par le fait que** l'adaptateur (23) est situé dans la première section (6) et dans la bride (8) et **par le fait que** l'adaptateur comprend une partie externe (24) avec une forme qui correspond aux dimensions internes de la première section (6) et aux dimensions internes de la bride (8), la partie interne (25) de l'adaptateur (23) comprenant au moins une partie de la section de commande (9).

7. Fixation de cadre (1) selon la revendication 1 ou 2, **caractérisée par le fait que** la bride (8) s'étend tout du long jusqu'à une surface d'extrémité (12) de l'unité cylindrique (3), la surface interne de la bride (8) créant la section de commande (9).

8. Fixation de cadre (1) selon l'une quelconque des revendications précédentes, **caractérisée par le fait que** la section de commande (9) et le corps (15) sont conçus selon les paramètres et relations suivants : L1 = la longueur de la section de commande dans une direction axiale ; L2 = la distance entre la section de commande et la surface d'extrémité de l'unité cylindrique (y compris la section de commande) ; D1 = le diamètre de la section de commande ;

L3 = la longueur du corps dans une direction axiale le long de l'axe central du dispositif de fixation ; L4 = la distance entre la tête du dispositif de fixation et la surface d'extrémité de l'unité cylindrique (à l'exclusion de la tête) le long de l'axe central du dispositif de fixation lorsque la tête du dispositif de fixation est en contact avec la bride ; D2 = le diamètre du corps ; a = l'angle entre l'axe central du dispositif de fixation et l'axe central de l'agencement de commande ; Rradial = le mouvement radial maximal de l'axe central du dispositif de fixation pour L1-L4, D1 et D2 donnés, par rapport à l'axe central de l'agencement cylindrique ; Rpivot = le mouvement de pivotement maximal de l'axe central du dispositif de fixation pour L1-L4, D1 et D2 donnés, par rapport à l'axe central de l'agencement cylindrique ; Rradial = (D1-D2)/2 ; a = arctan ((D1-D2)/L1) ; Rpivot = L4xtan (a)x1/2 ; Rpivot = L4x(D1-D2)/L1x1/2.

9. Fixation de cadre (1) selon la revendication 6, **caractérisée par le fait que** L2 est supérieure ou égale à L1 ; L1 est inférieure ou égale à L3 ; et L4 est inférieure ou égale à L3.

## Fig. 1

### (Prior art)

EP 2 029 847 B2

Fig. 2

(Prior art)

EP 2 029 847 B2

Fig. 3

(Prior art)

EP 2 029 847 B2

Fig. 4

(Prior art)

Fig. 5

Fig. 6

EP 2 029 847 B2

EP 2 029 847 B2

Fig. 7

Fig. 8

Fig. 9

EP 2 029 847 B2

Fig. 10

Fig. 11

Fig. 12

Fig. 13

Fig. 14

Fig. 15

EP 2 029 847 B2

31

EP 2 029 847 B2

## Fig. 16

Fig. 17

EP 2 029 847 B2

Fig. 18

**EP 2 029 847 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2123513 A